# EUROPEAN PATENT APPLICATION

(11) **EP 3 826 008 A1**
(43) Date of publication of application: **26.05.2021**
(21) Application number: 19846665.8
(22) Date of filing: 06.06.2019
(51) Int. Cl.: G10L 15/26, G10L 17/22, H04M 1/67, H04M 1/725

(54) **VOICE PROCESSING METHOD AND APPARATUS, STORAGE MEDIUM, AND ELECTRONIC DEVICE**

(30) Priority: 08.08.2018 CN 201810898885
(71) Applicant: GUANGDONG OPPO MOBILE TELECOMMUNICATIONS CORP., LTD., Dongguan Guangdong 523860 (CN)
(72) Inventor: CHEN, Yan, Dongguan, Guangdong 523860 (CN)
(74) Representative: Manitz Finsterwald Patent- und Rechtsanwaltspartnerschaft mbB
(86) International application number: PCT/CN2019/090417
(87) International publication number: WO 2020/029673

(57) **Abstract**

A voice processing method and apparatus, a storage medium, and an electronic device. The voice processing method comprises: obtaining voice information of a user; obtaining a preset keyword set according to a display state of a display screen of an electronic device; determining whether the preset keyword set comprises a second keyword which is the same as a first keyword; and yes, executing an operation instruction corresponding to the first keyword.

## Description

### CROSS-REFERENCE TO RELATED APPLICATIONS

The present disclosure claims foreign priority of Chinese Patent Application No. 201810898885.X, with the title of "VOICE PROCESSING METHOD AND APPARATUS, STORAGE MEDIUM, AND ELECTRONIC DEVICE", filed on August 08, 2018 in China National Intellectual Property Administration, the entire contents of which are hereby incorporated by reference.

### TECHNICAL FIELD

The present disclosure relates to the technical field of voice recognition, and in particular, to a voice processing method and apparatus, a storage medium, and an electronic device.

### BACKGROUND

With rapid development of electronic technology, functions of electronic devices such as smart phones are becoming more and more abundant. For example, a voice processing function can support a user to realize operation on an electronic device through a voice manner. Therefore, the voice processing function realizes better voice interaction experience for users.

### SUMMARY OF THE DISCLOSURE

Embodiments of the present disclosure provides a voice processing method and apparatus, a storage medium, and an electronic device, which can improve wake-up rates of electronic devices.

In a first aspect, an embodiment of the present disclosure provides a voice processing method, comprising: obtaining voice information of a user, wherein the voice information comprises a first keyword; obtaining a preset keyword set according to a display state of a display screen of an electronic device, wherein the display state comprises a locked state and an unlocked state, and the preset keyword set comprises at least one second keyword; determining whether the preset keyword set comprises a second keyword which is the same as the first keyword; when the preset keyword set comprises a second keyword which is the same as the first keyword, executing an operation instruction corresponding to the first keyword.

In a second aspect, an embodiment of the present disclosure further provides a voice processing apparatus, comprising: a first obtaining module configured to obtain voice information of a user, wherein the voice information comprises a first keyword; a second obtaining module configured to obtain a preset keyword set according to a display state of a display screen of an electronic device, wherein the display state comprises a locked state and an unlocked state, and the preset keyword set comprises at least one second keyword; a determining module configured to determine whether the preset keyword set comprises a second keyword which is the same as the first keyword; an executing module configured to: when the preset keyword set comprises a second keyword which is the same as the first keyword, execute an operation instruction corresponding to the first keyword.

In a third aspect, an embodiment of the present disclosure further provides a storage medium, wherein the storage medium stores a computer program; when the computer program runs in a computer, the computer is made to execute the following operations: obtaining voice information of a user, wherein the voice information comprises a first keyword; obtaining a preset keyword set according to a display state of a display screen of an electronic device, wherein the display state comprises a locked state and an unlocked state, and the preset keyword set comprises at least one second keyword; determining whether the preset keyword set comprises a second keyword which is the same as the first keyword; when the preset keyword set comprises a second keyword which is the same as the first keyword, executing an operation instruction corresponding to the first keyword.

In a fourth aspect, an embodiment of the present disclosure further provides an electronic device comprising a processor and a memory; wherein the memory stores a computer program, and the processor is configured to execute the following operations by calling the computer program stored in the memory: obtaining voice information of a user, wherein the voice information comprises a first keyword; obtaining a preset keyword set according to a display state of a display screen of an electronic device, wherein the display state comprises a locked state and an unlocked state, and the preset keyword set comprises at least one second keyword; determining whether the preset keyword set comprises a second keyword which is the same as the first keyword; when the preset keyword set comprises a second keyword which is the same as the first keyword, executing an operation instruction corresponding to the first keyword.

### BRIEF DESCRIPTION OF THE DRAWINGS

In order to describe technical solutions in embodiments of the present disclosure more clearly, drawings required being used in description of the embodiments will be simply introduced below. Obviously, the drawings in the following description are merely some embodiments of the present disclosure. For one of ordinary skill in the art, it is also possible to obtain other drawings according to these drawings without paying any creative work.
FIG 1 is a schematic view of a user performing voice control for an electronic device.
FIG 2 is a schematic flow chart of a voice processing method provided by an embodiment of the present disclosure.
FIG 3 is another schematic flow chart of a voice processing method provided by an embodiment of the present disclosure.
FIG 4 is another schematic flow chart of a voice processing method provided by an embodiment of the present disclosure.
FIG 5 is another schematic flow chart of a voice processing method provided by an embodiment of the present disclosure.
FIG 6 is a structural schematic view of a voice processing apparatus provided by an embodiment of the present disclosure.
FIG. 7 is another structural schematic view of a voice processing apparatus provided by an embodiment of the present disclosure.
FIG. 8 is a structural schematic view of an electronic device provided by an embodiment of the present disclosure.
FIG. 9 is another structural schematic view of an electronic device provided by an embodiment of the present disclosure.

### DETAILED DESCRIPTION

Technical solutions in embodiments of the present disclosure will be described clearly and completely below in accompany with drawings in embodiments of the present disclosure. Obviously, the described embodiments are merely some embodiments of the present disclosure, but not all embodiments. Based on embodiments of the present disclosure, all other embodiments obtained by one of ordinary skill in the art without paying any creative work belong to the protection scope of the present disclosure.

The terms "first", "second", "third", and the like (if existing) in the specification and claims of the present disclosure and the above-mentioned drawings are used to distinguish similar objects, and not necessarily used to describe a specific order or precedence. It should be understood that the objects described in this way can be interchanged under appropriate circumstances. In addition, the terms "include" and "have" and any variations of them are intended to cover non-exclusive inclusion. For example, a process or a method that includes a series of steps or an apparatus, an electronic device, or a system that includes a series of modules is not necessarily limited to those steps or modules that are clearly listed, but may also include steps or modules that are not clearly listed, and may also include other steps or modules inherent to these processes, methods, apparatuses, electronic devices or systems.

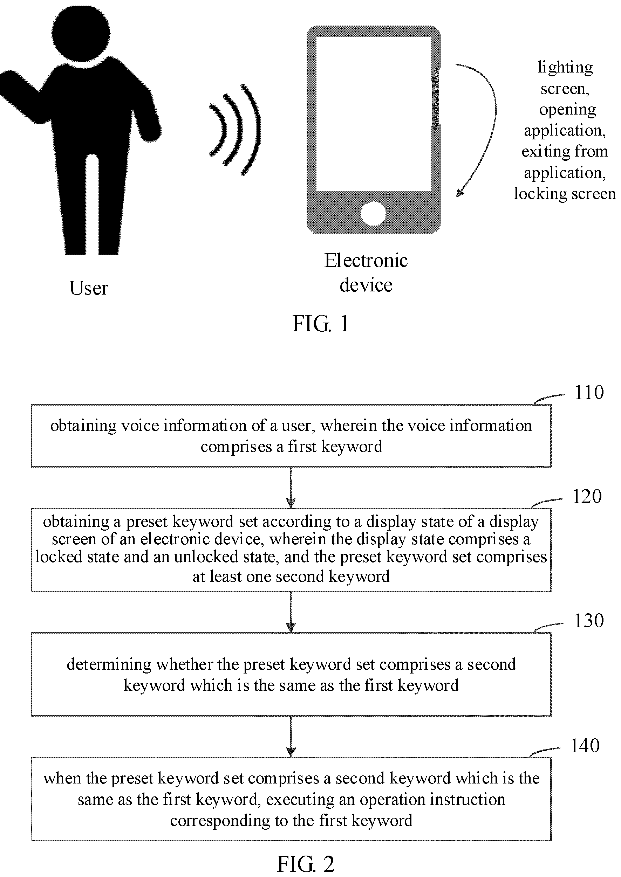

Referring to FIG. 1, FIG. 1 is a schematic view of a user performing voice control for an electronic device.

Wherein, the user outputs a segment of voice, and the electronic device collects the user's voice information. Subsequently, the electronic device compares the collected voice information with a voice recognition model stored in the electronic device. When the voice information matches the voice recognition model, the electronic device recognizes a control instruction from the voice information. Subsequently, the electronic device executes operations corresponding to the control instruction, such as operations of turning on a screen, opening an application, exiting from an application, locking the screen, etc., so as to realize voice control for the electronic device by the user.

An embodiment of the present disclosure provides a voice processing method, and the voice processing method can be applied in an electronic device. The electronic device may be a smart phone, a tablet computer, a game device, an AR (Augmented Reality) device, an automobile, a data storage device, an audio playback device, a video playback device, a notebook, a desktop computer, or other devices.

An embodiment of the present disclosure provides a voice processing method, comprising: obtaining voice information of a user, wherein the voice information comprises a first keyword; obtaining a preset keyword set according to a display state of a display screen of an electronic device, wherein the display state comprises a locked state and an unlocked state, and the preset keyword set comprises at least one second keyword; determining whether the preset keyword set comprises a second keyword which is the same as the first keyword; when the preset keyword set comprises a second keyword which is the same as the first keyword, executing an operation instruction corresponding to the first keyword.

In some embodiments, the obtaining a preset keyword set according to a display state of a display screen of an electronic device comprises: when the display state of the display screen is the locked state, obtaining a first preset keyword set; when the display state of the display screen is the unlocked state, determining a currently running foreground application; obtaining a second preset keyword set according to the foreground application and a preset correspondence relationship, wherein the preset correspondence relationship comprises correspondence relationships between applications and preset keyword sets.

In some embodiments, the obtaining a second preset keyword set according to the foreground application and a preset correspondence relationship comprises: determining an application interface currently displayed by the foreground application; obtaining the second preset keyword set according to the foreground application, the application interface, and the correspondence relationship, wherein the correspondence relationship comprises correspondence relationships among the application, the application interface, and the preset keyword set.

In some embodiments, the obtaining a second preset keyword set according to the foreground application and a preset correspondence relationship comprises: obtaining geographic location information where the electronic device is currently located; obtaining the second preset keyword set according to the foreground application, the geographic location information, and the correspondence relationship, wherein the correspondence relationship comprises correspondence relationships among the application, the geographic location information, and the preset keyword set.

In some embodiments, the first keyword comprises a first sub-keyword and a second sub-keyword; the determining whether the preset keyword set comprises a second keyword which is the same as the first keyword comprises: determining whether the preset keyword set comprises a third sub-keyword which is the same as the first sub-keyword and a fourth sub-keyword which is the same as the second sub-keyword; the when the preset keyword set comprises a second keyword which is the same as the first keyword, executing an operation instruction corresponding to the first keyword comprises: when the preset keyword set comprises a third sub-keyword which is the same as the first sub-keyword and a fourth sub-keyword corresponding to the second sub-keyword, executing an operation instruction corresponding to the first keyword.

In some embodiments, before the obtaining voice information of a user, the method further comprises: obtaining training voice information of the user; performing training for the training voice information to obtain a preset voice recognition model.

In some embodiments, before the obtaining a preset keyword set according to a display state of a display screen of an electronic device, the method further comprises: extracting voiceprint feature of the user from the voice information; matching the voiceprint feature with the preset voice recognition model; when the voiceprint feature and the preset voice recognition model are matched successfully, obtaining the preset keyword set according to a display state of a display screen of an electronic device.

As shown in FIG. 2, the voice processing method can comprise the following operations.

110, voice information of a user is obtained, wherein the voice information comprises a first keyword.

After the electronic device turns on a voice processing function, the electronic device obtains voice information of the user. For example, the electronic device can be provided therein with a microphone, and the electronic device collect voice information of the user through the microphone.

Wherein, the voice information comprises a first keyword. A server executes an operation instruction for the electronic device through the first keyword in the user's voice information. For example, the voice information can comprise operation instructions such as "I want to light the screen", "please turn on Wechat", "I want to exit from Taobao", etc. The first keyword then can be "light the screen", "turn on Wechat", "exit from Taobao", etc. Therefore, the voice information can comprise the first keyword, and can also be the first keyword.

120, a preset keyword set is obtained according to a display state of a display screen of the electronic device, wherein the display state comprises a locked state and an unlocked state, and the preset keyword set comprises at least one second keyword.

At first, a display state of the display screen of the electronic device is determined. The display state comprises a locked state and an unlocked state, wherein the locked state comprises a screen-off state and a screen-locked state. In the locked state, identity authentication information of the user is required to perform authentication such that the electronic device can be turned on, and thus operation can be performed on the electronic device. The identity authentication information comprises: password information input by the user, a fingerprint feature of the user, a facial feature of the user, a voiceprint feature of the user, etc.

In the screen-off state, the display screen of the electronic device does not display any interface of the electronic device, that is, in a state that the backlight is normally turned off and the screen is turned off to save power. For example, when the electronic device has determined that the display state of the electronic device is in the screen-off state, the server obtains the first preset keyword set corresponding to the screen-off state. After the user sends voice information of "open the main interface of the electronic device", it is determined whether the first preset keyword set includes a second keyword which is the same as "open the main interface of the electronic device", wherein the second keyword is "open the main interface of electronic device".

In the screen-locked state, the screen of the electronic device is lighted, and a screen-locked interface is displayed; however, the electronic device cannot perform any operation, the identity authentication information of the user needs to be authenticated and pass, and then the locked screen can be opened. The identity authentication information comprises: password information input by the user, a fingerprint feature of the user, a facial feature of the user, a voiceprint feature of the user, etc. For example, the user lights the screen, but the electronic device is unable to perform operations in the screen-locked state. When the server determines that the electronic device is in the screen-locked state, the electronic device obtains the first preset keyword stored therein. Then the user sends voice information "open the locked screen", and it is determined whether the first preset keyword comprises a second keyword which is the same as "open the locked screen", wherein the second keyword is "open the locked screen".

In the unlocked state, the screen of the electronic device is not locked and can be used normally. For example, after the electronic device is unlocked, it can perform making calls, sending short messages, opening applications, and so on. If the electronic device is unlocked but does not perform any operation, the electronic device obtains a third preset keyword set stored therein, and then operations are performed on the electronic device. For example, in the unlocked state, the electronic device does not perform any operation, and the user sends voice information of "open the phone book". The electronic device obtains the third preset keyword set stored therein internally, and determines whether the third preset keyword set comprises a second keyword which is the same as "open phone book", where the second keyword is "open phone book".

130, whether the preset keyword set comprises a second keyword which is the same as the first keyword is determined.

The first keyword is included in the voice information of the user. Whether the preset keyword set comprises a second keyword which is the same as the first keyword is determined. For example, the user sends voice information "I want to take photos", and then the first keyword is "take photos". The server recognizes that the electronic device opens an application of XX camera, therefore, a corresponding preset keyword set in the electronic device is subsequently loaded according to the application. It is determined whether the preset keyword set comprises a second keyword "take photos" which is the same as the first keyword "take photos".

140, if the preset keyword set comprises a second keyword which is the same as the first keyword, an operation instruction corresponding to the first keyword is executed.

If the first keyword is the same as the second keyword in the preset keyword set, an operation instruction corresponding to the first keyword is executed. For example, the user sends voice information "I want to take photos", and then the first keyword is "take photos". The server recognizes that the electronic device opens an application of XX camera, therefore, a corresponding preset keyword set in the electronic device is subsequently loaded according to the application. It is determined whether the preset keyword set comprises a second keyword which is the same as the first keyword "take photos". If there is the keyword "take photos", that is, the second keyword in the preset keyword set, the electronic device executes an operation instruction of "take photos", and performs taking photos in the XX camera.

It needs to be explained that the voice information can be the first keyword sent by the user, and can also comprise the first keyword, but all operations need to complete the operation instruction according to the first keyword.

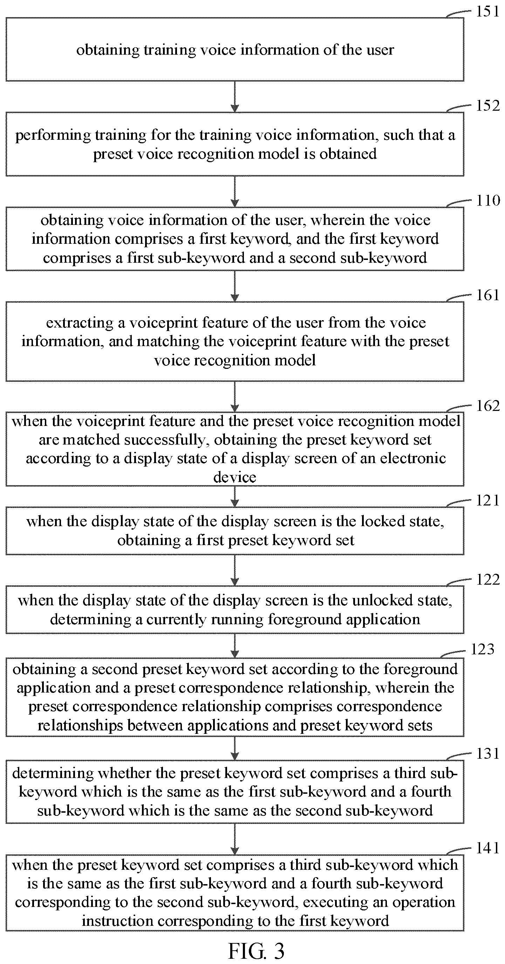

In some embodiments, as shown in FIG. 3, before the operation 110: obtaining voice information of a user, the following operations are further comprised.

151, training voice information of the user is obtained.

152, training is performed for the training voice information, such that a preset voice recognition model is obtained.

The training voice information of the user is obtained. The training voice information includes a plurality of keywords. Training is performed for the training voice information, such that the preset voice recognition model is obtained. The voice information can also be only the keywords. When the user sends voice information, the voice information of the user is recognized, and the first keyword in the voice information is obtained. For example, the user sends voice information "I want to take photos" and "open XX video". Thus, training can be performed for "I want to take photos" and "open XX video" to obtain the preset voice recognition model.

The preset voice recognition model can not only recognize the keywords in the voice information, but also recognize voiceprint features, such as the user's tone, speech rate, and breath of speech, etc. For example, if the user has a bright voice and sends out the voice information of "I want to take photos", then the user's bright voice is trained and the voice information of "I want to take photos" is trained, so as to obtain the preset voice recognition model.

110, voice information of the user is obtained, wherein the voice information comprises a first keyword, and the first keyword comprises a first sub-keyword and a second sub-keyword.

For example, the user sends voice information "enter a panorama model to take photos", thus the first keyword is "enter a panorama model to take photos". In the two operation instructions generated by the first keyword, one is "enter a panorama model", and the other is "take photos". Therefore, the first keyword comprises a first sub-keyword "enter a panorama model" and a second sub-keyword "take photos".

For another example, the user sends voice information "open the locked screen and take photos", thus the first keyword is "open the locked screen and take photos". It can be seen that the first keyword shows two operation instructions, one is "open the locked screen", and the other is "take photos". Therefore, the first keyword comprises a first sub-keyword "open the locked screen" and a second sub-keyword "take photos".

In some embodiments, as shown in FIG. 3, before the operation 120: obtaining a preset keyword set, the following operations are further comprised.

161: a voiceprint feature of the user is extracted from the voice information, and the voiceprint feature is matched with the preset voice recognition model.

162, when the voiceprint feature and the preset voice recognition model are matched successfully, the preset keyword set is obtained according to a display state of a display screen of an electronic device.

The voiceprint feature of the user is extracted, and the voiceprint feature comprises: the tone of the user, the breath of the user's voice, the user's speech rate, and so on. When the voiceprint feature can match with the preset voice recognition model, then the preset keyword set can be obtained. For example, if the user sends the voice information "take photos", a server detects that the user's voice is a bright tone; the user's bright tone is stored in the preset voice recognition model, thus the tone of the voice sent by user is the same as the voice tone stored in the preset voice recognition model, and then the preset keyword set can be directly obtained.

If the voiceprint feature does not match with the preset voice recognition model, the preset keyword set cannot be obtained. For example, a friend of the user sends voice information of "take photos", but the friend of the user has a low tone. The server does not detect the low tone in the preset voice recognition model. Thus, even if "take photos" is spoken and the keyword "take photos" is included in the preset voice recognition model, the electronic device cannot be made to perform operations. In summary, only when the voiceprint feature match with the voiceprint feature stored in the preset voice recognition model, the preset keyword set can be obtained. If only the voice information matches but the voiceprint feature does not match, the preset keyword set cannot be obtained. This greatly enhances the security of the electronic device, thereby protecting the user's private information and so on.

When the voiceprint feature and the preset voice recognition model are matched successfully, the preset keyword set is obtained according to a display state of a display screen of the electronic device. At first, a display state of the display screen of the electronic device is determined. The display state comprises a locked state and an unlocked state, wherein the locked state comprises a screen-off state and a screen-locked state. In the locked state, identity authentication information of the user is required to perform authentication such that the electronic device can be turned on, and thus operation can be performed on the electronic device. The identity authentication information comprises: password information input by the user, a fingerprint feature of the user, a facial feature of the user, a voiceprint feature of the user, etc.

In the screen-off state, the display screen of the electronic device does not display any interface of the electronic device, that is, in a state that the backlight is normally turned off and the screen is turned off to save power. For example, when the electronic device has determined that the display state of the electronic device is in the screen-off state, the server obtains the first preset keyword set corresponding to the screen-off state. After the user sends voice information of "open the main interface of the electronic device", it is determined whether the first preset keyword set includes a second keyword which is the same as "open the main interface of the electronic device", wherein the second keyword is "open the main interface of electronic device".

In the screen-locked state, the screen of the electronic device is lighted, and a screen-locked interface is displayed; however, the electronic device cannot perform any operation, the identity authentication information of the user needs to be authenticated and pass, and then the locked screen can be opened. The identity authentication information comprises: password information input by the user, a fingerprint feature of the user, a facial feature of the user, a voiceprint feature of the user, etc. For example, the user lights the screen, but the electronic device is unable to perform operations in the screen-locked state. When the server determines that the electronic device is in the screen-locked state, the electronic device obtains the first preset keyword stored therein. Then the user sends voice information "open the locked screen", and it is determined whether the first preset keyword comprises a second keyword which is the same as "open the locked screen", wherein the second keyword is "open the locked screen".

In the unlocked state, the screen of the electronic device is not locked and can be used normally. For example, after the electronic device is unlocked, it can perform making calls, sending short messages, opening applications, and so on. If the electronic device is unlocked but does not perform any operation, the electronic device obtains a third preset keyword set stored therein, and then operations are performed on the electronic device. For example, in the unlocked state, the electronic device does not perform any operation, and the user sends voice information of "open the phone book". The electronic device obtains the third preset keyword set stored therein internally, and determines whether the third preset keyword set comprises a second keyword which is the same as "open phone book", where the second keyword is "open phone book".

In some embodiments, as shown in FIG. 3, the operation 120: obtaining a preset keyword set, wherein the preset keyword set comprises at least one second keyword comprises the following operations.

121, if the display state of the display screen is the locked state, a first preset keyword set is obtained.

122, if the display state of the display screen is the unlocked state, a currently running foreground application is determined.

123, according to the foreground application and a preset correspondence relationship, a second preset keyword set is obtained, wherein the preset correspondence relationship comprises correspondence relationships between applications and preset keyword sets.

At first, a display state of the display screen of the electronic device is determined. The display state comprises a locked state and an unlocked state, wherein the locked state comprises a screen-off state and a screen-locked state. In the locked state, identity authentication information of the user is required to perform authentication such that the electronic device can be turned on, and thus operation can be performed on the electronic device. The identity authentication information comprises: password information input by the user, a fingerprint feature of the user, a facial feature of the user, a voiceprint feature of the user, etc.

In the screen-off state, the display screen of the electronic device does not display any interface of the electronic device, that is, in a state that the backlight is normally turned off and the screen is turned off to save power. For example, when the electronic device has determined that the display state of the electronic device is in the screen-off state, the server obtains the first preset keyword set corresponding to the screen-off state. After the user sends voice information of "open the main interface of the electronic device", it is determined whether the first preset keyword set includes a second keyword which is the same as "open the main interface of the electronic device", wherein the second keyword is "open the main interface of electronic device".

In the screen-locked state, the screen of the electronic device is lighted, and a screen-locked interface is displayed; however, the electronic device cannot perform any operation, the identity authentication information of the user needs to be authenticated and pass, and then the locked screen can be opened. The identity authentication information comprises: password information input by the user, a fingerprint feature of the user, a facial feature of the user, a voiceprint feature of the user, etc. For example, the user lights the screen, but the electronic device is unable to perform operations in the screen-locked state. When the server determines that the electronic device is in the screen-locked state, the electronic device obtains the first preset keyword stored therein. Then the user sends voice information "open the locked screen", and it is determined whether the first preset keyword comprises a second keyword which is the same as "open the locked screen", wherein the second keyword is "open the locked screen".

In the unlocked state, the user opens a certain application in the electronic device. The server can first determine a currently running foreground application, and then obtains the second preset keyword set according to the foreground application and the preset correspondence relationship. For example, the foreground application of the electronic device comprises: XX camera, XX map, XX video, etc., and each application corresponds to a fixed second preset keyword set. When it is detected that the electronic device opens the XX camera, the corresponding second preset keyword set is loaded from the inside of the electronic device, such that the operation instruction in the XX camera application is performed. Alternatively, when it is detected that the electronic device opens the XX map, the corresponding second preset keyword set is loaded from the inside of the electronic device, such that the operation instruction in the XX map application is performed.

For example, the preset correspondence relationships can be the correspondence relationships as shown in Table 1:

**Table 1**

| | |
|---|---|
| Application 1 | Preset keyword set 1 |
| Application 2 | Preset keyword set 2 |
| ... ... | ... ... |

As shown in Table 1, the correspondence relationships between the applications and the preset keyword sets can be clearly understood.

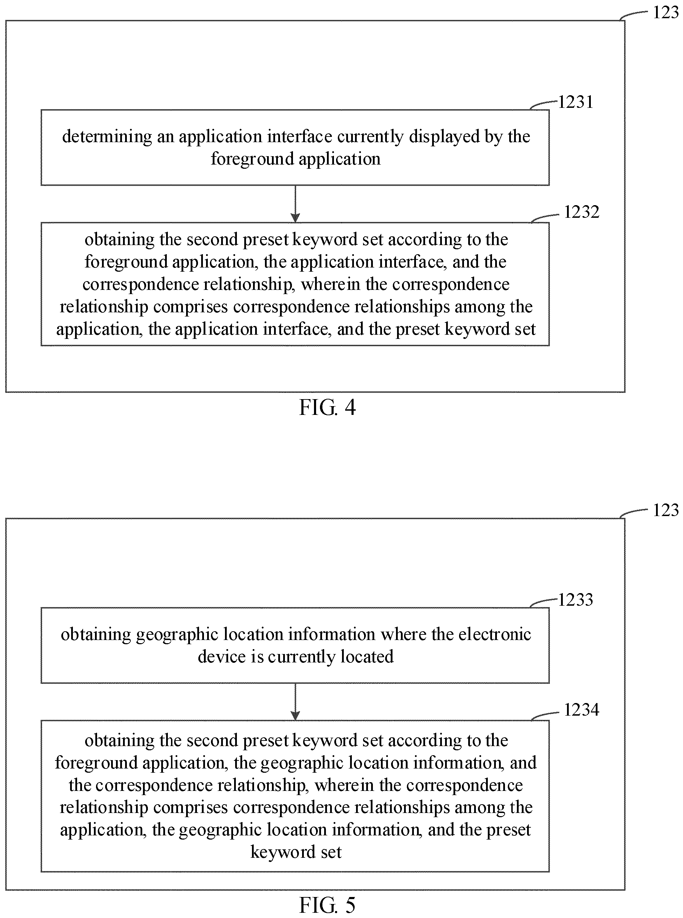

In some embodiments, as shown in FIG. 4, 123: obtaining a second preset keyword set according to the foreground application and a preset correspondence relationship comprises the following operations.

1231, an application interface currently displayed by the foreground application is determined.

1232, according to the foreground application, the application interface, and the correspondence relationship, the second preset keyword set is obtained, wherein the correspondence relationship comprises correspondence relationships among the application, the application interface, and the preset keyword set.

In an electronic device, there is not only a main interface but also an interface such as personal information when opening an application. For example, social software includes: a text input interface, an address book interface, a video call interface, and so on. Thus, the text input interface corresponds to a preset keyword set, the address book corresponds to a preset keyword set, and so on. For another example, XX shopping software includes: a payment interface, a browsing interface, a shopping cart interface, and so on. The payment interface corresponds to a preset keyword set, the browsing interface corresponds to a preset keyword set, and so on. The preset correspondence relationship may be the correspondence relationships shown in Table 2:

**Table 2**

| | | |
|---|---|---|
| Application 1 | Interface 1 | Preset keyword set 1 |
| | Interface 2 | Preset keyword set 2 |
| | ... ... | ... ... |
| Application 2 | Interface 3 | Preset keyword set 3 |
| | Interface 4 | Preset keyword set 4 |
| | ... ... | ... ... |
| ... ... | ... ... | ... ... |

In some embodiments as shown in FIG. 5, 123: obtaining a second preset keyword set according to the foreground application and a preset correspondence relationship comprises the following operations.

1233, geographic location information where the electronic device is currently located is obtained.

1234, according to the foreground application, the geographic location information, and the correspondence relationship, the second preset keyword set is obtained, wherein the correspondence relationship comprises correspondence relationships among the application, the geographic location information, and the preset keyword set.

When an application in an electronic device is opened, geographic location information where the electronic device is currently located can be obtained. The geographic location can be positioned and recognized according to GPS (Global Positioning System). For example, a server recognizes that geographic locations where the electronic device is currently located include a library, an office, a supermarket, and so on. Thus, the library corresponds to a preset keyword set, the office corresponds to a preset keyword set, and so on. The preset correspondence relationship may be the correspondence relationships shown in Table 3:

**Table 3**

| | | |
|---|---|---|
| Application 1 | Geographic location 1 | Preset keyword set 1 |
| | Geographic location 2 | Preset keyword set 2 |
| | ... ... | ... ... |
| Application 2 | Geographic location 3 | Preset keyword set 3 |
| | Geographic location 4 | Preset keyword set 4 |
| | ... ... | ... ... |
| ... ... | ... ... | ... ... |

In some embodiments, as shown in FIG. 3, the operation 130: determining whether the preset keyword set comprises a second keyword which is the same as the first keyword comprises the following operations.

131, whether the preset keyword set comprises a third sub-keyword which is the same as the first sub-keyword and a fourth sub-keyword which is the same as the second sub-keyword is determined.

After obtaining the preset keyword set, the server compares the first sub-keyword and the second sub-keyword in the voice information with the preset keyword set, so as to perform a next operation according to the comparison result.

For example, the user sends voice information "enter a panorama mode to take photos", thus the first sub-keyword is "enter a panorama mode", and the second sub-keyword is "take photos". It is determined whether there are a third sub-keyword "enter a panorama mode" and a fourth sub-keyword "take photos" in the preset keyword set. Herein, the first sub-keyword can also be "take photos", and the second sub-keyword can be "enter a panorama mode". Moreover, the third sub-keyword is "take photos", and the fourth sub-keyword is "enter a panorama mode".

In some embodiments, as shown in FIG. 3, the operation 140: if the preset keyword set comprises a second keyword which is the same as the first keyword, executing an operation instruction corresponding to the first keyword comprises the following operations.

141, if the preset keyword set comprises a third sub-keyword which is the same as the first sub-keyword and a fourth sub-keyword corresponding to the second sub-keyword, an operation instruction corresponding to the first keyword is executed.

According to the determining method of the operation 131, if the preset keyword set comprises a third sub-keyword which is the same as the first sub-keyword and a fourth sub-keyword corresponding to the second sub-keyword, an operation instruction corresponding to the first keyword is executed.

For example, the user sends voice information "enter a panorama mode to take photos", thus the first sub-keyword is "enter a panorama mode", and the second sub-keyword is "take photos". It is determined whether there are a third sub-keyword "enter a panorama mode" and a fourth sub-keyword "take photos" in the preset keyword set. Herein, the first sub-keyword can also be "take photos", and the second sub-keyword can be "enter a panorama mode". Moreover, the third sub-keyword is "take photos", and the fourth sub-keyword is "enter a panorama mode". It can be seen that the first sub-keyword "enter a panorama mode" is the same as the third sub-keyword "enter a panorama mode", and the second sub-keyword "take photos" is the same as the fourth sub-keyword "take photos". Alternatively, the first sub-keyword "take photos" is the same as the third sub-keyword "take photos", and the second sub-keyword "enter a panorama mode" is the same as the fourth sub-keyword "enter a panorama mode". Thus, the server executes the operation instruction of "enter a panorama mode to take photos".

In specific implementation, the present disclosure is not limited by the order of execution of the described operations, and certain steps may also be performed in other orders or at the same time if there is no conflict.

It can be known from the above that the voice processing method provided by embodiments of the present disclosure comprises: obtaining voice information of a user; obtaining a preset keyword set according to a display state of a display screen of an electronic device, wherein the preset keyword set comprises at least one second keyword; determining whether the preset keyword set comprises a second keyword which is the same as the first keyword; if the preset keyword set comprises a second keyword which is the same as the first keyword, executing an operation instruction corresponding to the first keyword. In the voice processing method, the electronic device obtains the preset keyword set according to the display state of the display screen, such that the electronic device supports obtaining corresponding preset keyword sets in different display states of the display screen. Afterwards, the electronic device internally determines whether the preset keyword set comprises a second keyword which is the same as the first keyword. The preset keyword set is in correspondence with different display states of the display screen of the electronic device, and if the first keyword is the same as the second keyword in the preset keyword set, the electronic device will necessarily perform voice processing in a corresponding display state; therefore, the voice processing method improves a wake-up rate of the electronic device.

An embodiment of the present disclosure further provides a voice processing apparatus, the voice processing apparatus can be integrated in an electronic device.

An embodiment of the present disclosure further provides a voice processing apparatus, comprising: a first obtaining module configured to obtain voice information of a user, wherein the voice information comprises a first keyword; a second obtaining module configured to obtain a preset keyword set according to a display state of a display screen of an electronic device, wherein the display state comprises a locked state and an unlocked state, and the preset keyword set comprises at least one second keyword; a determining module configured to determine whether the preset keyword set comprises a second keyword which is the same as the first keyword; an executing module configured to: when the preset keyword set comprises a second keyword which is the same as the first keyword, execute an operation instruction corresponding to the first keyword.

In some embodiments, the second obtaining module is configured to: when the display state of the display screen is the locked state, obtain a first preset keyword set; when the display state of the display screen is the unlocked state, determine a currently running foreground application; obtain a second preset keyword set according to the foreground application and a preset correspondence relationship, wherein the preset correspondence relationship comprises correspondence relationships between applications and preset keyword sets.

In some embodiments, when obtaining a second preset keyword set according to the foreground application and a preset correspondence relationship, the second obtaining module is configured to: determine an application interface currently displayed by the foreground application; obtain the second preset keyword set according to the foreground application, the application interface, and the correspondence relationship, wherein the correspondence relationship comprises correspondence relationships among the application, the application interface, and the preset keyword set.

In some embodiments, when obtaining a second preset keyword set according to the foreground application and a preset correspondence relationship, the second obtaining module is configured to: obtain geographic location information where the electronic device is currently located; obtain the second preset keyword set according to the foreground application, the geographic location information, and the correspondence relationship, wherein the correspondence relationship comprises correspondence relationships among the application, the geographic location information, and the preset keyword set.

In some embodiments, the first keyword comprises a first sub-keyword and a second sub-keyword; the determining module is configured to: determine whether the preset keyword set comprises a third sub-keyword which is the same as the first sub-keyword and a fourth sub-keyword which is the same as the second sub-keyword; the executing module is configured to: when the preset keyword set comprises a third sub-keyword which is the same as the first sub-keyword and a fourth sub-keyword corresponding to the second sub-keyword, execute an operation instruction corresponding to the first keyword.

In some embodiments, the voice processing apparatus further comprises a training module, and the training module is configured to: obtain training voice information of the user; perform training for the training voice information to obtain a preset voice recognition model.

In some embodiments, the voice processing apparatus further comprises a matching module, and the matching module is configured to: extract voiceprint feature of the user from the voice information; match the voiceprint feature with the preset voice recognition model; the second obtaining module is configured to: when the voiceprint feature and the preset voice recognition model are matched successfully, obtain the preset keyword set according to a display state of a display screen of an electronic device.

As shown in FIG .6, a voice processing apparatus 200 can comprise: a first obtaining module 201, a second obtaining module 202, a determining module 203, and an executing module 204.

The first obtaining module 201 is configured to obtain voice information of a user, wherein the voice information comprises a first keyword.

After the electronic device turns on a voice processing function, the electronic device obtains voice information of the user. For example, the electronic device can be provided therein with a microphone, and the electronic device collect voice information of the user through the microphone.

Wherein, the voice information comprises a first keyword. A server executes an operation instruction for the electronic device through the first keyword in the user's voice information. For example, the voice information can comprise operation instructions such as "I want to light the screen", "please turn on Wechat", "I want to exit from Taobao", etc. The first keyword then can be "light the screen", "turn on Wechat", "exit from Taobao", etc.

The second obtaining module 202 is configured to obtain a preset keyword set according to a display state of a display screen of the electronic device, wherein the display state comprises a locked state and an unlocked state, and the preset keyword set comprises at least one second keyword.

At first, a display state of the display screen of the electronic device is determined. The display state comprises a locked state and an unlocked state, wherein the locked state comprises a screen-off state and a screen-locked state. In the locked state, identity authentication information of the user is required to perform authentication such that the electronic device can be turned on, and thus operation can be performed on the electronic device. The identity authentication information comprises: password information input by the user, a fingerprint feature of the user, a facial feature of the user, a voiceprint feature of the user, etc.

In the screen-off state, the display screen of the electronic device does not display any interface of the electronic device, that is, in a state that the backlight is normally turned off and the screen is turned off to save power. For example, when the electronic device has determined that the display state of the electronic device is in the screen-off state, the server obtains the first preset keyword set corresponding to the screen-off state. After the user sends voice information of "open the main interface of the electronic device", it is determined whether the first preset keyword set includes a second keyword which is the same as "open the main interface of the electronic device", wherein the second keyword is "open the main interface of electronic device".

In the screen-locked state, the screen of the electronic device is lighted, and a screen-locked interface is displayed; however, the electronic device cannot perform any operation, the identity authentication information of the user needs to be authenticated and pass, and then the locked screen can be opened. The identity authentication information comprises: password information input by the user, a fingerprint feature of the user, a facial feature of the user, a voiceprint feature of the user, etc. For example, the user lights the screen, but the electronic device is unable to perform operations in the screen-locked state. When the server determines that the electronic device is in the screen-locked state, the electronic device obtains the first preset keyword stored therein. Then the user sends voice information "open the locked screen", and it is determined whether the first preset keyword comprises a second keyword which is the same as "open the locked screen", wherein the second keyword is "open the locked screen".

In the unlocked state, the screen of the electronic device is not locked and can be used normally. For example, after the electronic device is unlocked, it can perform making calls, sending short messages, opening applications, and so on. If the electronic device is unlocked but does not perform any operation, the electronic device obtains a third preset keyword set stored therein, and then operations are performed on the electronic device. For example, in the unlocked state, the electronic device does not perform any operation, and the user sends voice information of "open the phone book". The electronic device obtains the third preset keyword set stored therein internally, and determines whether the third preset keyword set comprises a second keyword which is the same as "open phone book", where the second keyword is "open phone book".

The determining module 203 is configured to determine whether the preset keyword set comprises a second keyword which is the same as the first keyword.

The first keyword is included in the voice information of the user. Whether the preset keyword set comprises a second keyword which is the same as the first keyword is determined. For example, the user sends voice information "I want to take photos", and then the first keyword is "take photos". The server recognizes that the electronic device opens an application of XX camera, therefore, a preset keyword set in the electronic device is subsequently loaded according to the application. It is determined whether the preset keyword set comprises a second keyword "take photos" which is the same as the first keyword "take photos".

The executing module 204 is configured to: if the preset keyword set comprises a second keyword which is the same as the first keyword, execute an operation instruction corresponding to the first keyword.

If the first keyword is the same as the second keyword in the preset keyword set, an operation instruction corresponding to the first keyword is executed. For example, the user sends voice information "I want to take photos", and then the first keyword is "take photos". The server recognizes that the electronic device opens an application of XX camera, therefore, a preset keyword set in the electronic device is subsequently loaded according to the application. It is determined whether the preset keyword set comprises a second keyword which is the same as the first keyword "take photos". If there is the keyword "take photos", that is, the second keyword in the preset keyword set, the electronic device executes an operation instruction of "take photos", and performs taking photos in the XX camera.

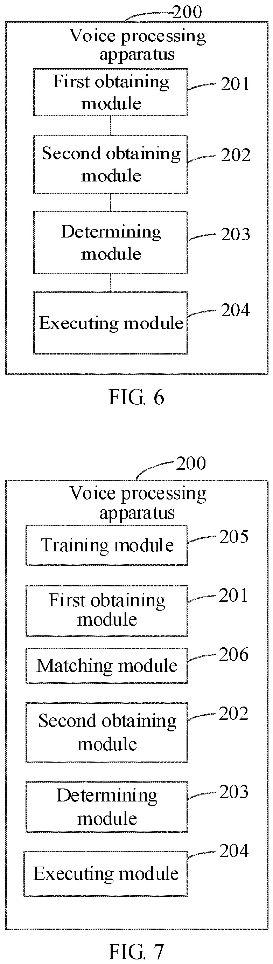

In some embodiments, as shown in FIG. 7, before obtaining voice information of a user, a training module 205 is further included and configured to execute the following operations.

Training voice information of the user is obtained.

Training is performed for the training voice information, such that a preset voice recognition model is obtained.

The training voice information of the user is obtained. The training voice information includes a plurality of keywords. Training is performed for the training voice information, such that the preset voice recognition model is obtained. The voice information can also be only the keywords. When the user sends voice information, the voice information of the user is recognized, and the first keyword in the voice information is obtained. For example, the user sends voice information "I want to take photos" and "open XX video". Thus, training can be performed for "I want to take photos" and "open XX video" to obtain the preset voice recognition model.

The preset voice recognition model can not only recognize the keywords in the voice information, but also recognize voiceprint features, such as the user's tone, speech rate, and breath of speech, etc. For example, if the user has a bright voice and sends out the voice information of "I want to take photos", then the user's bright voice and the voice information of "I want to take photos" are trained, so as to obtain the preset voice recognition model.

The first obtaining module 201 is configured to obtain voice information of the user, wherein the voice information comprises a first keyword, and the first keyword comprises a first sub-keyword and a second sub-keyword.

For example, the user sends voice information "enter a panorama model to take photos", thus the first keyword is "enter a panorama model to take photos". In the two operation instructions generated by the first keyword, one is "enter a panorama model", and the other is "take photos". Therefore, the first keyword comprises a first sub-keyword "enter a panorama model" and a second sub-keyword "take photos".

For another example, the user sends voice information "open the locked screen and take photos", thus the first keyword is "open the locked screen and take photos". It can be seen that the first keyword shows two operation instructions, one is "open the locked screen", and the other is "take photos". Therefore, the first keyword comprises a first sub-keyword "open the locked screen" and a second sub-keyword "take photos".

In some embodiments, as shown in FIG. 7, before obtaining the preset keyword set, a matching module 206 is configured to execute the following operations.

A voiceprint feature of the user is extracted from the voice information, and the voiceprint feature is matched with the preset voice recognition model.

When the voiceprint feature and the preset voice recognition model are matched successfully, the preset keyword set is obtained according to a display state of a display screen of an electronic device.

The voiceprint feature of the user is extracted, and the voiceprint feature comprises: the tone of the user, the breath of the user's voice, the user's speech rate, and so on. When the voiceprint feature can match with the preset voice recognition model, then the preset keyword set can be obtained. For example, if the user sends the voice information "take photos", a server detects that the user's voice is a bright tone; the user's bright tone is stored in the preset voice recognition model, thus the tone of the voice sent by user is the same as the voice tone stored in the preset voice recognition model, and then the preset keyword set can be directly obtained.

If the voiceprint feature does not match with the preset voice recognition model, the preset keyword set cannot be obtained. For example, a friend of the user sends voice information of "take photos", but the friend of the user has a low tone. The server does not detect the low tone in the preset voice recognition model. Thus, even if "take photos" is spoken and the keyword "take photos" is included in the preset voice recognition model, the electronic device cannot be made to perform operations. In summary, only when the voiceprint feature match with the voiceprint feature stored in the preset voice recognition model, the preset keyword set can be obtained. If only the voice information matches but the voiceprint feature does not match, the preset keyword set cannot be obtained. This greatly enhances the security of the electronic device, thereby protecting the user's private information and so on.

In some embodiments, obtaining the preset keyword set comprises the following operations.

If the display state of the display screen is the locked state, a first preset keyword set is obtained.

If the display state of the display screen is the unlocked state, a currently running foreground application is determined.

According to the foreground application and a preset correspondence relationship, a second preset keyword set is obtained, wherein the preset correspondence relationship comprises correspondence relationships between applications and preset keyword sets.

At first, a display state of the display screen of the electronic device is determined. The display state comprises a locked state and an unlocked state, wherein the locked state comprises a screen-off state and a screen-locked state. In the locked state, identity authentication information of the user is required to perform authentication such that the electronic device can be turned on, and thus operation can be performed on the electronic device. The identity authentication information comprises: password information input by the user, a fingerprint feature of the user, a facial feature of the user, a voiceprint feature of the user, etc.

In the screen-off state, the display screen of the electronic device does not display any interface of the electronic device, that is, in a state that the backlight is normally turned off and the screen is turned off to save power. For example, when the electronic device has determined that the display state of the electronic device is in the screen-off state, the server obtains the first preset keyword set corresponding to the screen-off state. After the user sends voice information of "open the main interface of the electronic device", it is determined whether the first preset keyword set includes a second keyword which is the same as "open the main interface of the electronic device", wherein the second keyword is "open the main interface of electronic device".

In the screen-locked state, the screen of the electronic device is lighted, and a screen-locked interface is displayed; however, the electronic device cannot perform any operation, the identity authentication information of the user needs to be authenticated and pass, and then the locked screen can be opened. The identity authentication information comprises: password information input by the user, a fingerprint feature of the user, a facial feature of the user, a voiceprint feature of the user, etc. For example, the user lights the screen, but the electronic device is unable to perform operations in the screen-locked state. When the server determines that the electronic device is in the screen-locked state, the electronic device obtains the first preset keyword stored therein. Then the user sends voice information "open the locked screen", and it is determined whether the first preset keyword comprises a second keyword which is the same as "open the locked screen", wherein the second keyword is "open the locked screen".

In the unlocked state, the user opens a certain application in the electronic device. The server can first determine a currently running foreground application, and then obtains the second preset keyword set according to the foreground application and the preset correspondence relationship. For example, the foreground application of the electronic device comprises: XX camera, XX map, XX video, etc., and each application corresponds to a fixed second preset keyword set. When it is detected that the electronic device opens the XX camera, the corresponding second preset keyword set is loaded from the inside of the electronic device, such that the operation instruction in the XX camera application is performed. Alternatively, when it is detected that the electronic device opens the XX map, the corresponding second preset keyword set is loaded from the inside of the electronic device, such that the operation instruction in the XX map application is performed.

In some embodiments, as shown in FIG. 6, the second preset keyword set is obtained according to the foreground application and the preset correspondence relationship, and the second obtaining module 202 comprises the following operations.

An application interface currently displayed by the foreground application is determined.

According to the foreground application, the application interface, and the correspondence relationship, the second preset keyword set is obtained, wherein the correspondence relationship comprises correspondence relationships among the application, the application interface, and the preset keyword set.

In an electronic device, there is not only a main interface but also an interface such as personal information when opening an application. For example, social software includes: a text input interface, an address book interface, a video call interface, and so on. Thus, the text input interface corresponds to a preset keyword set, the address book corresponds to a preset keyword set, and so on. For another example, XX shopping software includes: a payment interface, a browsing interface, a shopping cart interface, and so on. The payment interface corresponds to a preset keyword set, the browsing interface corresponds to a preset keyword set, and so on.

In some embodiments, as shown in FIG. 7, the second preset keyword set is obtained according to the foreground application and the preset correspondence relationship, and the second obtaining module 202 comprises the following operations.

Geographic location information where the electronic device is currently located is obtained.

According to the foreground application, the geographic location information, and the correspondence relationship, the second preset keyword set is obtained, wherein the correspondence relationship comprises correspondence relationships among the application, the geographic location information, and the preset keyword set.

When an application in an electronic device is opened, geographic location information where the electronic device is currently located can be obtained. The geographic location can be positioned and recognized according to GPS (Global Positioning System). For example, a server recognizes that geographic locations where the electronic device is currently located include a library, an office, a supermarket, and so on. Thus, the library corresponds to a preset keyword set, the office corresponds to a preset keyword set, and so on.

In some embodiments, when determining whether the preset keyword set comprises the second keyword which is the same as the first keyword, the determining module 203 is configured to execute the following operations.

After obtaining the preset keyword set, the server compares the first sub-keyword and the second sub-keyword in the voice information with the preset keyword set, so as to perform a next operation according to the comparison result.

For example, the user sends voice information "enter a panorama mode to take photos", thus the first sub-keyword is "enter a panorama mode", and the second sub-keyword is "take photos". It is determined whether there are a third sub-keyword "enter a panorama mode" and a fourth sub-keyword "take photos" in the preset keyword set. Herein, the first sub-keyword can also be "take photos", and the second sub-keyword can be "enter a panorama mode". Moreover, the third sub-keyword is "take photos", and the fourth sub-keyword is "enter a panorama mode".

In some embodiments, if the preset keyword set comprises a second keyword which is the same as the first keyword, when executing an operation instruction corresponding to the first keyword, the executing module 204 is configured to execute the following operations.

If the preset keyword set comprises a third sub-keyword which is the same as the first sub-keyword and a fourth sub-keyword corresponding to the second sub-keyword, an operation instruction corresponding to the first keyword is executed.

For example, the user sends voice information "enter a panorama mode to take photos", thus the first sub-keyword is "enter a panorama mode", and the second sub-keyword is "take photos". It is determined whether there are a third sub-keyword "enter a panorama mode" and a fourth sub-keyword "take photos" in the preset keyword set. Herein, the first sub-keyword can also be "take photos", and the second sub-keyword can be "enter a panorama mode". Moreover, the third sub-keyword is "take photos", and the fourth sub-keyword is "enter a panorama mode". It can be seen that the first sub-keyword "enter a panorama mode" is the same as the third sub-keyword "enter a panorama mode", and the second sub-keyword "take photos" is the same as the fourth sub-keyword "take photos". Alternatively, the first sub-keyword "take photos" is the same as the third sub-keyword "take photos", and the second sub-keyword "enter a panorama mode" is the same as the fourth sub-keyword "enter a panorama mode". Thus, the server executes the operation instruction of "enter a panorama mode to take photos".

In specific implementation, the above-described modules can be implemented as independent entities, and can also be combined arbitrarily and implemented as the same or a plurality of entities.

It can be known from the above that the voice processing apparatus 200 provided by embodiments of the present disclosure obtains voice information of a user by the first obtaining module 201. The second obtaining module 202 obtains a preset keyword set according to a display state of a display screen of an electronic device, wherein the preset keyword set comprises at least one second keyword. The determining module 203 determines whether the preset keyword set comprises a second keyword which is the same as the first keyword. The executing module 204 is configured to: if the preset keyword set comprises a second keyword which is the same as the first keyword, execute an operation instruction corresponding to the first keyword. In the voice processing apparatus 200, the electronic device obtains the preset keyword set according to the display state of the display screen, such that the electronic device supports obtaining the second obtaining module 202 in different display states of the display screen. Afterwards, the determining module 203 determines whether the preset keyword set comprises a second keyword which is the same as the first keyword. The preset keyword set is in correspondence with different display states of the display screen of the electronic device, and if the first keyword is the same as the second keyword in the preset keyword set, the electronic device will necessarily perform voice processing in a corresponding display state; therefore, the voice processing method improves a wake-up rate of the electronic device.

Embodiments of the present disclosure further provide an electronic device. The electronic device may be a smart phone, a tablet computer, a game device, an AR (Augmented Reality) device, an automobile, a data storage device, an audio playback device, a video playback device, a notebook, a desktop computer, a wearable device such as an electronic watch, electronic glasses, an electronic helmet, an electronic bracelet, an electronic necklace, electronic clothing, etc., or other devices.

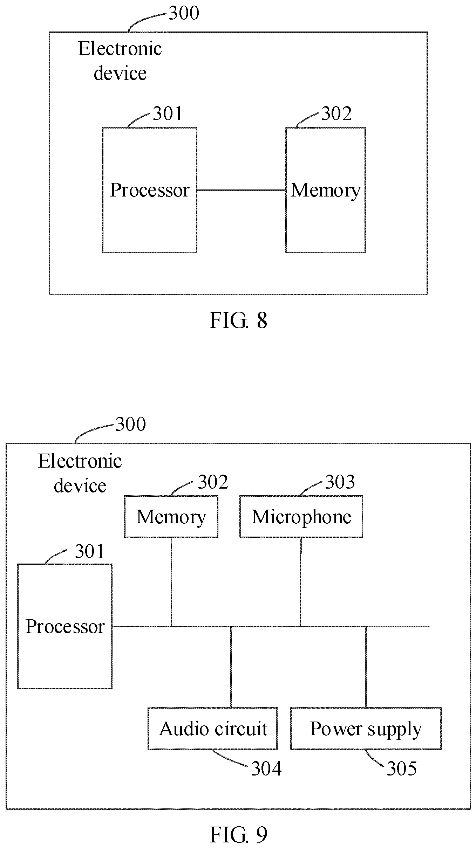

As shown in FIG. 8, the electronic device 300 comprises a processor 301 and a memory 302, wherein the processor 301 is electrically connected with the memory 302.

The processor 301 is a control center of the electronic 300, connects various parts of the whole electronic device using various interfaces and wires, and performs various functions of the electronic device and processes data through running or calling computer programs stored in the memory 302 and calling data stored in the memory 302, so as to perform overall detection for the electronic device.

In this embodiment, the processor 301 of the electronic device 300 can load instructions corresponding to processes of one or more computer programs into the memory 302 according to the following operations, and the computer programs stored in the memory 302 will be executed by the processor 301 to achieve various functions.

Voice information of a user is obtained, wherein the voice information comprises a first keyword.

A preset keyword set is obtained according to a display state of a display screen of an electronic device, wherein the display state comprises a locked state and an unlocked state, and the preset keyword set comprises at least one second keyword.

Whether the preset keyword set comprises a second keyword which is the same as the first keyword is determined.

If the preset keyword set comprises a second keyword which is the same as the first keyword, an operation instruction corresponding to the first keyword is executed.

In some embodiments, before obtaining voice information of a user, wherein the voice information comprises a first keyword, the processor 301 executes the following operations.

Training voice information of the user is obtained.

Training is performed for the training voice information, such that a preset voice recognition model is obtained.

In some embodiments, before obtaining a preset keyword set, and the preset keyword set comprises at least one second keyword, the processor 301 executes the following operations.

A voiceprint feature of the user is extracted from the voice information.

The voiceprint feature is matched with the preset voice recognition model.

When the voiceprint feature and the preset voice recognition model are matched successfully, the preset keyword set is obtained according to a display state of a display screen of an electronic device.

In some embodiments, when the preset keyword set is obtained according to a display state of a display screen of an electronic device, the processor 301 executes the following operations.

If the display state of the display screen is the locked state, a first preset keyword set is obtained.

If the display state of the display screen is the unlocked state, a currently running foreground application is determined.

According to the foreground application and a preset correspondence relationship, a second preset keyword set is obtained, wherein the preset correspondence relationship comprises correspondence relationships between applications and preset keyword sets.

In some embodiments, when a second preset keyword set is obtained according to the foreground application and a preset correspondence relationship, the processor 301 executes the following operations.

An application interface currently displayed by the foreground application is determined.

According to the foreground application, the application interface, and the correspondence relationship, the second preset keyword set is obtained, wherein the correspondence relationship comprises correspondence relationships among the application, the application interface, and the preset keyword set.

In some embodiments, when a second preset keyword set is obtained according to the foreground application and a preset correspondence relationship, the processor 301 executes the following operations.

Geographic location information where the electronic device is currently located is obtained.

According to the foreground application, the geographic location information, and the correspondence relationship, the second preset keyword set is obtained, wherein the correspondence relationship comprises correspondence relationships among the application, the geographic location information, and the preset keyword set.

In some embodiments, the first keyword comprises a first sub-keyword and a second sub-keyword, when determining whether the preset keyword set comprises a second keyword which is the same as the first keyword, the processor 301 executes the following operations.

Whether the preset keyword set comprises a third sub-keyword which is the same as the first sub-keyword and a fourth sub-keyword which is the same as the second sub-keyword is determined.

If the preset keyword set comprises a second keyword which is the same as the first keyword, when executing an operation instruction corresponding to the first keyword, the processor 301 executes the following operations.

If the preset keyword set comprises a third sub-keyword which is the same as the first sub-keyword and a fourth sub-keyword corresponding to the second sub-keyword, an operation instruction corresponding to the first keyword is executed.

The memory 302 can be used to store computer programs and data. The computer programs stored in the memory 302 comprises instructions being executable in a processor. The computer programs can form various functional modules. The processor 301, by calling the computer programs stored in the memory 302, executes various functional applications and data processing.

In some embodiments, as shown in FIG. 8, the electronic device 300 further comprises: a microphone 303, an audio circuit 304, and a power supply 305. Wherein, the processor 301 is electrically connected with the microphone 301, the audio circuit 302, and the power supply 305 respectively.

The microphone 303 is used to collect voice information of users. In embodiments of the present disclosure, the microphone 303 is used to collect voice information of a user many times.

The audio circuit 304 can provide audio interfaces between a user and the electronic device through a microphone, a speaker, a sound transmitter, and so on.

The power supply 305 is used to supply power to various parts of the electronic device 300. In some embodiments, the power supply 305 can be logically connected with the processor 301 through a power management system, and thus achieve functions of managing charging and discharging, power consumption management, and so on through the power management system.

Although not shown in FIG. 9, the electronic device 300 can further comprise a display screen, a camera, a radio frequency circuit, a Bluetooth module, etc., and they are not repeated here.

It can be known from the above that embodiments of the present disclosure provide an electronic device, the electronic device executes the following operations: obtaining voice information of a user; obtaining a preset keyword set according to a display state of a display screen of an electronic device, wherein the preset keyword set comprises at least one second keyword; determining whether the preset keyword set comprises a second keyword which is the same as the first keyword; if the preset keyword set comprises a second keyword which is the same as the first keyword, executing an operation instruction corresponding to the first keyword. In the voice processing method, the electronic device obtains the preset keyword set according to the display state of the display screen, such that the electronic device supports obtaining a corresponding preset keyword set in different display states of the display screen. Afterwards, the electronic device internally determines whether the preset keyword set comprises a second keyword which is the same as the first keyword. The preset keyword set is in correspondence with different display states of the display screen of the electronic device, and if the first keyword is the same as the second keyword in the preset keyword set, the electronic device will necessarily perform voice processing in a corresponding display state; therefore, the voice processing method improves a wake-up rate of the electronic device.

Embodiments of the present disclosure further provide a storage medium, the storage medium stores a computer program. When the computer program is run in a computer, the computer executes the voice processing method described in any of the above embodiments.

For example, in some embodiments, when the computer program is run in a computer, the computer executes the following operations: obtaining voice information of a user, wherein the voice information comprises a first keyword; obtaining a preset keyword set according to a display state of a display screen of an electronic device, wherein the display state comprises a locked state and an unlocked state, and the preset keyword set comprises at least one second keyword; determining whether the preset keyword set comprises a second keyword which is the same as the first keyword; when the preset keyword set comprises a second keyword which is the same as the first keyword, executing an operation instruction corresponding to the first keyword.

It should be noted that one of ordinary skill in the art can understand that all or some of the operations in the various methods of the above-mentioned embodiments can be completed by instructing relevant hardware using a computer program. The computer program can be stored in a computer-readable storage medium. The storage medium may include but is not limited to: a read only memory (ROM, Read Only Memory), a random access memory (RAM, Random Access Memory), a magnetic disk, an optical disk, and the like.

The voice processing method, apparatus, storage medium, and electronic device provided by the embodiments of the present disclosure are described in detail above. Specific examples are used herein to illustrate principle and implementation of the present disclosure. The description of the above embodiments is only used to help understand the methods and core ideas of the present disclosure; at the same time, for those skilled in the art, according to the ideas of the present disclosure, there can be changes in specific embodiments and application scopes. In summary, the content of this specification should not be construed as any limitation to the present disclosure.

## Claims

1. A voice processing method, comprising:
obtaining voice information of a user, wherein the voice information comprises a first keyword;
obtaining a preset keyword set according to a display state of a display screen of an electronic device, wherein the display state comprises a locked state and an unlocked state, and the preset keyword set comprises at least one second keyword;
determining whether the preset keyword set comprises a second keyword which is the same as the first keyword;
when the preset keyword set comprises a second keyword which is the same as the first keyword, executing an operation instruction corresponding to the first keyword.

2. The voice processing method according to claim 1, wherein the obtaining a preset keyword set according to a display state of a display screen of an electronic device comprises:
when the display state of the display screen is the locked state, obtaining a first preset keyword set;
when the display state of the display screen is the unlocked state, determining a currently running foreground application;
obtaining a second preset keyword set according to the foreground application and a preset correspondence relationship, wherein the preset correspondence relationship comprises correspondence relationships between applications and preset keyword sets.

3. The voice processing method according to claim 2, wherein the obtaining a second preset keyword set according to the foreground application and a preset correspondence relationship comprises:
determining an application interface currently displayed by the foreground application;
obtaining the second preset keyword set according to the foreground application, the application interface, and the correspondence relationship, wherein the correspondence relationship comprises correspondence relationships among the application, the application interface, and the preset keyword set.

4. The voice processing method according to claim 2, wherein the obtaining a second preset keyword set according to the foreground application and a preset correspondence relationship comprises:
obtaining geographic location information where the electronic device is currently located;
obtaining the second preset keyword set according to the foreground application, the geographic location information, and the correspondence relationship, wherein the correspondence relationship comprises correspondence relationships among the application, the geographic location information, and the preset keyword set.

5. The voice processing method according to claim 1, wherein the first keyword comprises a first sub-keyword and a second sub-keyword;
the determining whether the preset keyword set comprises a second keyword which is the same as the first keyword comprises:
determining whether the preset keyword set comprises a third sub-keyword which is the same as the first sub-keyword and a fourth sub-keyword which is the same as the second sub-keyword;
the when the preset keyword set comprises a second keyword which is the same as the first keyword, executing an operation instruction corresponding to the first keyword comprises:
when the preset keyword set comprises a third sub-keyword which is the same as the first sub-keyword and a fourth sub-keyword corresponding to the second sub-keyword, executing an operation instruction corresponding to the first keyword.

6. The voice processing method according to claim 1, before the obtaining voice information of a user, further comprising:
obtaining training voice information of the user;
performing training for the training voice information to obtain a preset voice recognition model.

7. The voice processing method according to claim 6, before the obtaining a preset keyword set according to a display state of a display screen of an electronic device, further comprising:
extracting voiceprint feature of the user from the voice information;
matching the voiceprint feature with the preset voice recognition model;
when the voiceprint feature and the preset voice recognition model are matched successfully, obtaining the preset keyword set according to a display state of a display screen of an electronic device.

8. A voice processing apparatus, comprising:
a first obtaining module configured to obtain voice information of a user, wherein the voice information comprises a first keyword;
a second obtaining module configured to obtain a preset keyword set according to a display state of a display screen of an electronic device, wherein the display state comprises a locked state and an unlocked state, and the preset keyword set comprises at least one second keyword;
a determining module configured to determine whether the preset keyword set comprises a second keyword which is the same as the first keyword; an executing module configured to: when the preset keyword set comprises a second keyword which is the same as the first keyword, execute an operation instruction corresponding to the first keyword.

9. The voice processing apparatus according to claim 8, wherein the second obtaining module is configured to:
when the display state of the display screen is the locked state, obtain a first preset keyword set;
when the display state of the display screen is the unlocked state, determine a currently running foreground application;
obtain a second preset keyword set according to the foreground application and a preset correspondence relationship, wherein the preset correspondence relationship comprises correspondence relationships between applications and preset keyword sets.

10. The voice processing apparatus according to claim 9, wherein when obtaining a second preset keyword set according to the foreground application and a preset correspondence relationship, the second obtaining module is configured to:
determine an application interface currently displayed by the foreground application;
obtain the second preset keyword set according to the foreground application, the application interface, and the correspondence relationship, wherein the correspondence relationship comprises correspondence relationships among the application, the application interface, and the preset keyword set.

11. The voice processing apparatus according to claim 9, wherein when obtaining a second preset keyword set according to the foreground application and a preset correspondence relationship, the second obtaining module is configured to:
obtain geographic location information where the electronic device is currently located;
obtain the second preset keyword set according to the foreground application, the geographic location information, and the correspondence relationship, wherein the correspondence relationship comprises correspondence relationships among the application, the geographic location information, and the preset keyword set.

12. The voice processing apparatus according to claim 8, wherein the first keyword comprises a first sub-keyword and a second sub-keyword;
the determining module is configured to: determine whether the preset keyword set comprises a third sub-keyword which is the same as the first sub-keyword and a fourth sub-keyword which is the same as the second sub-keyword;
the executing module is configured to: when the preset keyword set comprises a third sub-keyword which is the same as the first sub-keyword and a fourth sub-keyword corresponding to the second sub-keyword, execute an operation instruction corresponding to the first keyword.

13. A storage medium, wherein the storage medium stores a computer program; when the computer program runs in a computer, the computer is made to execute the following operations:
obtaining voice information of a user, wherein the voice information comprises a first keyword;
obtaining a preset keyword set according to a display state of a display screen of an electronic device, wherein the display state comprises a locked state and an unlocked state, and the preset keyword set comprises at least one second keyword;
determining whether the preset keyword set comprises a second keyword which is the same as the first keyword;
when the preset keyword set comprises a second keyword which is the same as the first keyword, executing an operation instruction corresponding to the first keyword.

14. An electronic device comprising a processor and a memory; wherein the memory stores a computer program, and the processor is configured to execute the following operations by calling the computer program stored in the memory:
obtaining voice information of a user, wherein the voice information comprises a first keyword;
obtaining a preset keyword set according to a display state of a display screen of an electronic device, wherein the display state comprises a locked state and an unlocked state, and the preset keyword set comprises at least one second keyword;
determining whether the preset keyword set comprises a second keyword which is the same as the first keyword;
when the preset keyword set comprises a second keyword which is the same as the first keyword, executing an operation instruction corresponding to the first keyword.

15. The electronic device according to claim 14, wherein when obtaining a preset keyword set according to a display state of a display screen of an electronic device, the processor is configured to execute the following operations:
when the display state of the display screen is the locked state, obtaining a first preset keyword set;
when the display state of the display screen is the unlocked state, determining a currently running foreground application;
obtaining a second preset keyword set according to the foreground application and a preset correspondence relationship, wherein the preset correspondence relationship comprises correspondence relationships between applications and preset keyword sets.

16. The electronic device according to claim 15, wherein when obtaining a second preset keyword set according to the foreground application and a preset correspondence relationship, the processor is configured to execute the following operations:
determining an application interface currently displayed by the foreground application;
obtaining the second preset keyword set according to the foreground application, the application interface, and the correspondence relationship, wherein the correspondence relationship comprises correspondence relationships among the application, the application interface, and the preset keyword set.

17. The electronic device according to claim 15, wherein when obtaining a second preset keyword set according to the foreground application and a preset correspondence relationship, the processor is configured to execute the following operations:
obtaining geographic location information where the electronic device is currently located;
obtaining the second preset keyword set according to the foreground application, the geographic location information, and the correspondence relationship, wherein the correspondence relationship comprises correspondence relationships among the application, the geographic location information, and the preset keyword set.

18. The electronic device according to claim 14, wherein the first keyword comprises a first sub-keyword and a second sub-keyword;
when determining whether the preset keyword set comprises a second keyword which is the same as the first keyword, the processor is configured to execute the following operations:
determining whether the preset keyword set comprises a third sub-keyword which is the same as the first sub-keyword and a fourth sub-keyword which is the same as the second sub-keyword;
when the preset keyword set comprises a second keyword which is the same as the first keyword, executing an operation instruction corresponding to the first keyword, wherein the processor is configured to execute the following operations:
when the preset keyword set comprises a third sub-keyword which is the same as the first sub-keyword and a fourth sub-keyword corresponding to the second sub-keyword, executing an operation instruction corresponding to the first keyword.

19. The electronic device according to claim 14, wherein before the obtaining voice information of a user, the processor is further configured to execute the following operations:
obtaining training voice information of the user;
performing training for the training voice information to obtain a preset voice recognition model.

20. The electronic device according to claim 14, wherein before the obtaining a preset keyword set according to a display state of a display screen of an electronic device, the processor is configured to execute the following operations:
extracting voiceprint feature of the user from the voice information;
matching the voiceprint feature with the preset voice recognition model;
when the voiceprint feature and the preset voice recognition model are matched successfully, obtaining the preset keyword set according to a display state of a display screen of an electronic device.
